# EUROPÄISCHE PATENTANMELDUNG

(11) **EP 1 839 486 A2**
(43) Veröffentlichungstag der Anmeldung: **03.10.2007**
(21) Anmeldenummer: 07105482.9
(22) Anmeldetag: 02.04.2007
(51) Int. Cl.: A21C 9/08

(54) **Verfahren und Vorrichtung zum Wenden eines Teigstücks**

(30) Priorität: 31.03.2006 EP 06400016
(71) Anmelder: Fritsch GmbH, 97348 Markt Einersheim (DE)
(72) Erfinder: Bernhardt, Udo, 97346, Iphofen (DE)
(74) Vertreter: Götz, Georg Alois

(57) **Zusammenfassung**

Verfahren zum Wenden eines Teigstücks (4) insbesondere in Croissantform, bei dem unter Verwendung von Fördermitteln (12) das Teigstück (4) einer um eine Drehachse (9) drehbaren Wendeeinrichtung (10) zugeführt und von dieser wieder abtransportiert wird, und mittels einem oder mehreren Mitnehmerelementen auf der Außenwandung oder Außen-Ummantelung der Wendeeinrichtung (10) das Teigstück (4) erfasst, längs einer die Drehachse (9) umlaufenden Wendebahn geführt und dabei auf eine andere Seite gelegt wird, wobei das Teigstück (4) mit oder nach seinem Erfassen durch das oder die Mitnehmerelemente
a) von den Fördermitteln (12) gelöst,
b) nach seinem Durchlaufen der Wendebahn wieder in Eingriff mit den Fördermitteln (12) zwecks seines Abtransports (14) gebracht
c) und dabei aus oder von dem oder den Mitnehmerelementen gelöst und/oder entfernt wird.

## Beschreibung

Die Erfindung betrifft ein Verfahren gemäß Oberbegriff des Patentanspruchs 1 und eine Vorrichtung gemäß jeweiligem Oberbegriff der Patentansprüche 15 und 16.

Aus EP-A-1 317 883 ist ein Verfahren zum Wenden einer Backware bekannt, bei dem die Backware einem Aufnahmebereich zugeführt wird, der zwischen den gegenüberliegenden Flächen zweier Tische gebildet ist. Diese sind jeweils mit einem Förderband versehen. Durch Drehung der beiden Tische um eine gemeinsame Achse wird die aufgenommene Backware gewendet.

Im Zusammenhang mit der Herstellung von Brezelrohlingen ist eine etwa gattungsgemäße Wendeeinrichtung bekannt (DE-A-42 42 572), bei der Teiglinge bzw. Teigstücke auf einem Förderband angeliefert werden. Letzteres ist mittels einer Umlenkwalze mit einer Drehachse um einen Winkel von etwa 180° derart geführt, dass der entlang einer entsprechenden Bahn um die Drehachse mitgeführte Teigling auf ein Abtransportband fallen kann, das sich unterhalb des Umlenk-Förderbandes befindet. Damit der zu wendende Teigling sicher auf der Bewegungs- bzw. Wendebahn um die Drehachse geführt wird, ist eine Reihe von dünnen Walzen oder Rollen zusätzlich angeordnet, die um die erstgenannte Umlenkwalze mit darauf befindlichem Förderband herum angeordnet sind. Diese Zusatz-Rollen erhöhen einerseits den Konstruktions- und Bauaufwand, und führen andererseits, indem sie den Brezelrohling an das umlaufende Förderband drücken, zu einer Beeinträchtigung der Formgenauigkeit.

Der Erfindung liegt die Aufgabe zugrunde, bei einer Teigstück-Wendevorrichtung die Effizienz der Teigbehandlung zu erhöhen. Zur Lösung wird auf das im Patentanspruch 1 angegebene Verfahren zur Herstellung eines gewendeten Teigstücks verwiesen. In den unabhängigen, nebengeordneten Patentansprüchen 15 und 16 sind zur Durchführung des Verfahrens geeignete Vorrichtungen angegeben, die sich einerseits durch formschlüssig aufnehmende Mitnehmerelemente auf der drehbaren Wendeeinrichtung und andererseits durch von der Wendeeinrichtung entkoppelte und/oder separat ausgebildete Fördermittel auszeichnen, welche für den der Wendeeinrichtung vorgelagerten Zuführbereich und den der Wendeeinrichtung nachgeordneten Abtransportbereich der Teigstücke zuständig sind. Optionale, vorteilhafte Ausgestaltungen ergeben sich aus den abhängigen Ansprüchen.

Indem erfindungsgemäß das Teigstück vor seinem Durchlaufen der Wendebahn zunächst von den Fördermitteln gelöst wird, lässt sich eine mechanische, die Teigform verzerrende Belastung vermeiden, was auch eine schonendere Teigbehandlung ergibt. Das Wenden des Teigstücks wird allein mit den die Wendebahn durchlaufenden Mitnehmerelementen bewerkstelligt, woraus sich die vereinfachte, robuste Konstruktion ergibt. Ein weiterer, erzielter Vorteil besteht, mit bedingt durch die Vereinfachung der Konstruktion, in der Erhöhung der Prozesssicherheit und -zuverlässigkeit. Indem nach Beendigung des Wendens das Teigstück wieder in Eingriff mit den Fördermitteln gebracht wird, werden letztere effektiv für eine positionsgenaue Ablage bzw. Absetzung der gewendeten Teigstücke auf ein Absetzblech oder dergleichen eingesetzt. Mit besonderem Vorteil lässt sich im Rahmen der Erfindung vor dem Absetzen das gewendete Teigstück mittels der Fördermittel einfach aus dem oder den Mitnehmerelementen herausziehen.

Dem Aspekt der schonenden Teigbehandlung wird noch weiter dadurch Rechnung getragen, dass zur Aufnahme oder zum Abtransport der Teigstücke von der Wendestation deren Rotation oder sonstige Wendebewegung unterbrochen wird, die Fördermittel aber zum Zu- und Wegführen der Teigstücke bewegt werden. Andererseits findet während des Wendens eine Bewegung der Fördermittel, welche die Teigstückform beeinträchtigen könnte, nicht mehr statt. Insbesondere kann eine übergeordnete Steuerung so eingestellt sein, dass abwechselnd die Fördermittel und die Wendeeinrichtung angetrieben werden.

Zur Erhöhung des Teigstück-Durchsatzes bzw. der Produktionsgeschwindigkeit wird eine optionale Erfindungsausbildung dahingehend vorgeschlagen, dass mehrere, quer zur Teigstück-Förderrichtung nebeneinander liegende Wendestationen zueinander synchron bewegt und angehalten werden, um gewendete Teigstücke zu erhalten, die quer zur Förderrichtung gesehen in einer gemeinsamen Flucht bzw. geradlinigen Reihe ausgerichtet sind. Alternativ oder zusätzlich kann eine drehbare Wendestation mit einer Mehrzahl in Förder-Querrichtung deckungsgleich bzw. in gleicher Winkellage liegender Mitnehmerelemente versehen sein. Die lineare Querausrichtung lässt sich noch mittels eines Teigstück-Erkennungssensors verbessern. Von einem Verband mehrerer, angelieferter Teigstücke erkennt dieser Sensor das zuerst ankommende und gibt eine entsprechende Meldung an eine übergeordnete Steuerung ab. In dieser Steuerung ist eine Wartezeit implementiert, die so bemessen ist, dass die nachfolgenden Teigstücke desselben Verbands ausreichend Zeit haben, in je ein zugeordnetes Mitnehmerelement des oder der Wendestationen gefördert und platziert zu werden. Mit anderen Worten, der Teigstück-Sensor bzw. eine entsprechende Lichtschranke dient dazu, das oder gegebenenfalls ein erstes Teigstück eines Verbandes zu erkennen. Dann wird in der Steuerung die genannte Wartezeit programmtechnisch angestoßen, und nach Ablauf wird davon ausgegangen, dass alle Teigstücke von den Mitnehmerelementen der Wendestation erfasst sind. Dann wird der Wendevorgang eingeleitet, indem mittels der Steuerung die Mitnehmerelemente in der einen oder den mehreren nebeneinander aufgestellten Wendestationen in Bewegung versetzt werden, insbesondere durch Rotation des oder der Wendestationen (eine Wendestation kann auch mehrere in Förderrichtung quer nebeneinander angeordnete Mitnehmerelemente aufweisen). Damit lässt sich eine mehrspurige Teigbearbeitung realisieren.

Alternativ oder zusätzlich kann gemäß einer optionalen Erfindungsausbildung in der Steuerung ein Zeitversatzmaß eingestellt sein, welches der Zeitdauer entspricht, welche die Fördermittel zum Erfassen eines Teigstücks und zum Platzieren desselben in einem Mitnehmerelement benötigen. Erkennt eine Sensorik ein ankommendes Teigstück, insbesondere das letzte eines Teigstück-Verbandes, dann wird die Wendestation erst nach Ablauf des Zeitversatzmaßes gestartet, damit gewährleistet ist, dass gegebenenfalls auch das letzte Teigstück sicher von einem Mitnehmerelement erfasst ist.

Zur Erhöhung der Funktionssicherheit und baulichen Vereinfachung wird vorgeschlagen, für das Zuführen und den Abtransport der Teigstücke in bzw. aus den Mitnehmerelementen einheitliche Fördermittel zu verwenden, die im innigen Eingriff mit der Wendeeinrichtung stehen, insbesondere diese durchsetzen oder durchkämmen. Dies lässt sich konkret zweckmäßig dadurch realisieren, dass die Wendeeinrichtung oder -station in einzelne, voneinander beabstandete Scheiben unterteilt ist, durch welche Förderbänder, Riemen oder dergleichen durchlaufen, und zwar in einem entsprechenden, geeigneten Abstand, der durch den Abstand der Wendescheiben voneinander vorgegeben ist. Durch diesen über Durchkämmen oder Durchsetzen realisierten innigen Eingriff lässt sich ein zuverlässiges Platzieren und Entfernen der Teigstücke in bzw. aus den Mitnehmerelementen gewährleisten.

Der Teigstück-Durchsatz lässt sich noch dadurch erhöhen, dass gemäß einer Erfindungsausbildung über die Fördermittel ein Teigstück von einem ersten Mitnehmerelement erfasst oder diesen zugeführt wird, während gleichzeitig ein bereits gewendetes Teigstück von einem anderen Mitnehmerelement abweichender Winkellage entfernt wird. Die Fördermittel können dabei mit einem einheitlichen Bewegungsvorgang sowohl zum Zuführen als auch zum zeitgleichen Lösen der Teigstücke gegenüber den Mitnehmerelementen eingesetzt werden.

Bei Teigstücken mit einer U- oder hufeisenartig gebogenen Form (insbesondere geeignet für die Croissant-Herstellung), wobei die Form in zwei freie Schenkelenden ausläuft, besteht eine optionale Erfindungsausbildung darin, die Teigstücke der Wendeeinrichtung bzw. deren Mitnehmerelementen derart zuzuführen, dass die Schenkelenden nach hinten entgegen der Förderrichtung ausgerichtet sind. Nach einem Wenden um 180° ergibt sich der gewünschte Effekt, dass nun die Schenkelenden nach vorne in Lauf- beziehungsweise Förderrichtung weisen. Entsprechendes gilt für den abgestumpften Teigstück-Eckbereich (sog. "Schluss").

Für den oben angesprochenen Fall, dass die Fördermittel die Wendeeinrichtung durchsetzen oder durchdringen, besteht eine gerätetechnisch oder konstruktiv besonders vereinfachte Ausführung darin, dass der Wendeeinrichtung sowohl eingangs- als auch ausgangsseitig ein und dieselben Fördermittel zugeordnet sind. Mit anderen Worten, der Eingangs- und Ausgangsbereich werden von gemeinsamen Fördermitteln zum Zuführen bzw. Abtransport bedient.

Weitere Einzelheiten, Merkmale, (Unter-)Merkmalskombinationen und Wirkungen auf der Basis der Erfindung ergeben sich aus der nachfolgenden Darstellung einer besonderen Ausführungsform der Erfindung sowie aus den Zeichnungen. Diese zeigen in:
- Fig. 1: die einzelnen Verfahrensschritte des Wickelns eines Dreieck-Teiglings in ein gewendetes Croissant-Teigstück,

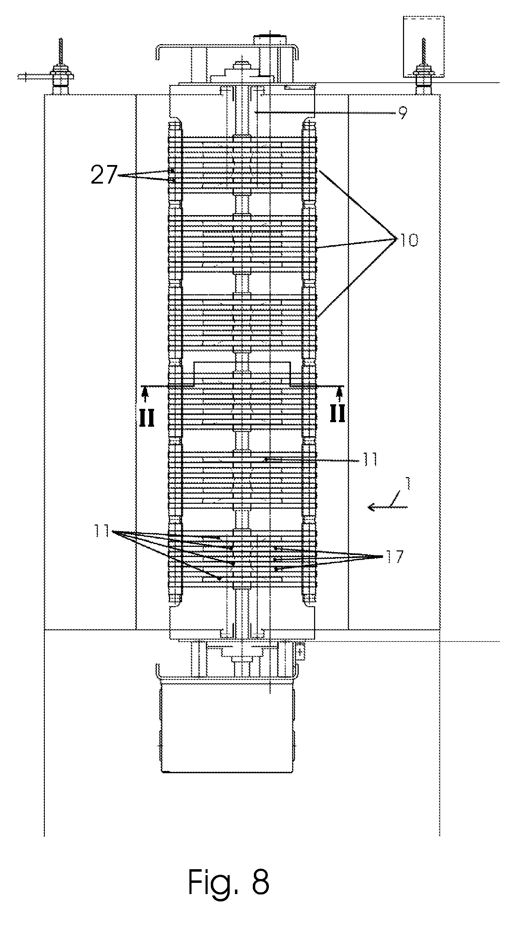

- Fig. 2: eine schematische Schnittansicht gemäß Linie II-II in Fig. 8 einer beispielhaften Wendevorrichtung
- Fig. 3: eine eingangsseitige, perspektivische Ansicht auf eine beispielhafte Wendevorrichtung für Croissant-Teigstücke mit einer Wendeeinrichtung, welche mit riemenförmigen Fördermitteln kämmt,
- Fig. 4: eine Fig. 3 entsprechende Ansicht, wobei die Winkelstellung der Aufnahmevertiefung als Mitnehmerelement gegenüber Fig. 3 verändert ist,
- Fig. 5: in perspektivischer Darstellung die Wendeeinrichtung in der Phase der Aufnahme eines croissantförmigen Teigstücks,
- Fig. 6: eine seitlich-perspektivische Ansicht zur Darstellung der Antriebsaggregate für die Wendeeinrichtung und für die Fördermittel nebst eingangsseitiger Sensorik,
- Fig.7: eine ausgangsseitige Ansicht auf eine Wendevorrichtung mit mehreren parallel betriebenen Wendeeinrichtungen,
- Fig.8: in Draufsicht eine schematische Darstellung einer Mehrfach-Wendevorrichtung mit mehreren parallelen Wendeeinrichtungen.

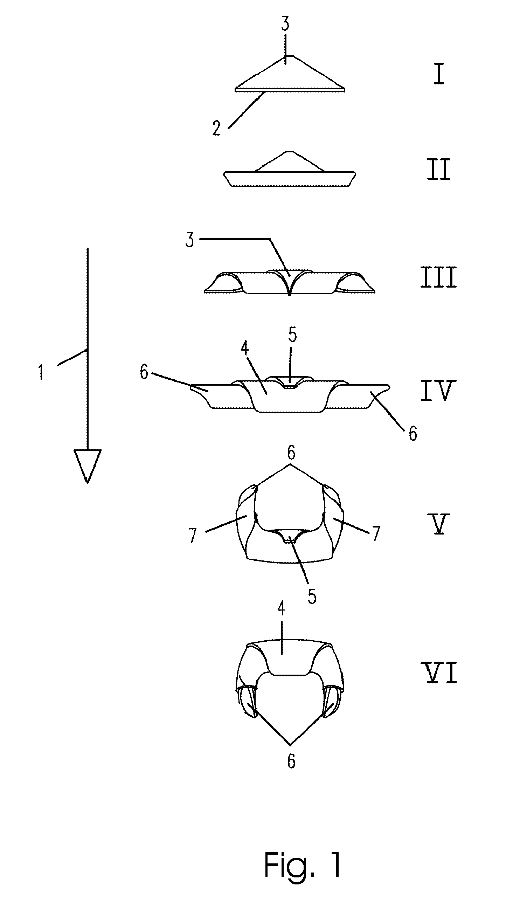

Nach Fig. 1 werden vor dem Einsatz der Wendevorrichtung zunächst die Wickel- bzw. Teigbearbeitungsschritte I, II, III, IV und V durchgeführt. Gemäß Schritt I wird zunächst ein flaches, dreieckförmiges Teigstück ausgestanzt, wobei in Förderrichtung 1 gesehen eine Dreiecksbasis 2 vorne liegt und eine Dreieckspitze 3 nach hinten weist. Um den apparativen und gerätetechnischen Aufwand möglichst gering zu halten, wird gemäß Schritt II die Dreieckbasis 2 nach oben eingeschlagen und gewickelt, bis gemäß Schritt III die Dreieckspitze 3 etwa mittig eine äußerste Lage bildet. Gemäß Schritt IV ist eine Ausrichtung des nun gewickelten Teigstücks IV um ihre eigene Längskörperachse derart erfolgt, dass der außenliegende Teigstück-Schluss 5 mittig zwischen den Spitzenden 6 des gewickelten Teigstücks 4 auf der Oberseite liegt. Ein Verfahren und eine Vorrichtung für ein derart schlusslagengenaues Ausrichten von gewickelten Teigprodukten ist in der älteren europäischen Patentanmeldung EP 05 106 923.5 (Anwaltsaktenzeichen: F001/184 E EP) offenbart. Beim nächsten Schritt V wird das Teigstück 4 U-artig gebogen, so dass die Spitzecken 6 bzw. die dort endenden Teigstück-Schenkel 7 gegenüber der Teigförderrichtung 1 nach hinten weisen. Nun braucht gemäß weiterem Schritt VI das Teigstück 4 nur noch um 180° in Teigförderrichtung 1 nach vorne gedreht zu werden, damit es in eine Bodenauflage kommt, welche zum Backen geeignet ist. Dazu ist darauf zu achten, dass der Teigstückschluss direkt auf dem Boden aufliegt, also gemäß Darstellung des Bearbeitungsschrittes VI nicht mehr sichtbar ist. Zur Herbeiführung dieser backgerechten Absetzung oder Ablage beispielsweise auf einem Backblech dient die erfindungsgemäße Wendevorrichtung.

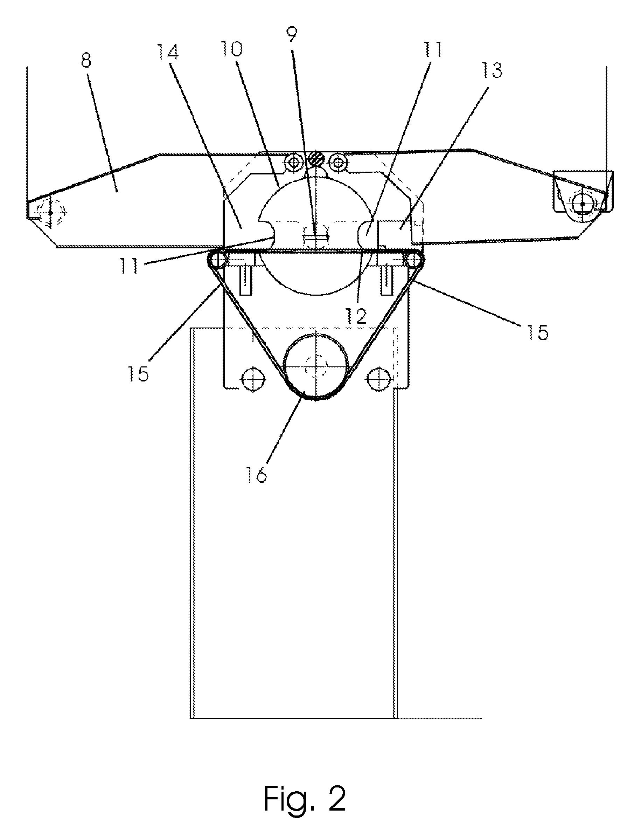

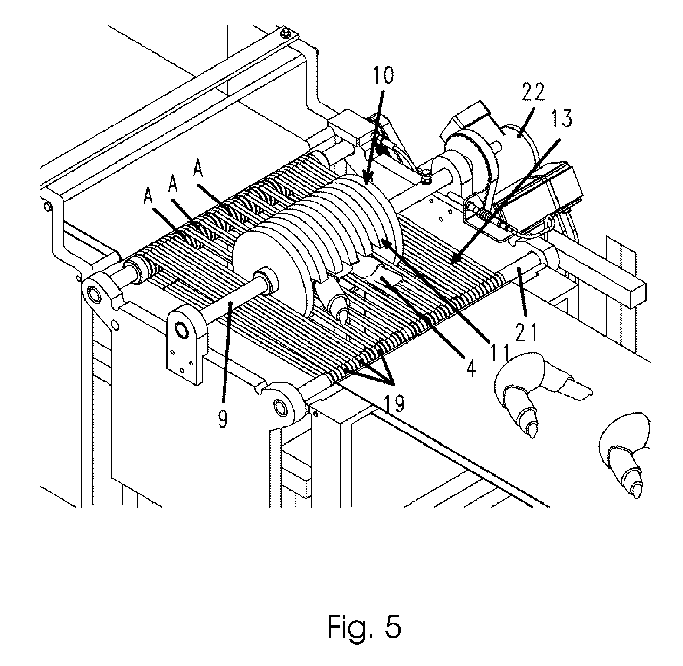

Gemäß Fig. 2 ist bei der erfindungsgemäßen Wendevorrichtung an einem Halterahmen 8 eine über eine Antriebswelle 9 drehbare Wendeeinrichtung 10 angebracht. Diese besitzt eine etwa walzenartige oder kreiszylindrische Grundform mit einander diametral gegenüberliegenden Aufnahmevertiefungen 11 am Außenumfang. Die Wendeeinrichtung 10 wird von Fördermitteln 12 durchsetzt, welche sowohl einen Eingangsbereich 13 als auch einen Ausgangsbereich 14 für die Wendeeinrichtung 10 bilden. Dem Antrieb der Fördermittel 12 kann beispielsweise ein Zahnkettentrieb 15 mit Antriebszahnrad 16 dienen. Weitere bzw. alternative Formen und Einzelheiten für die Antriebsmittel ergeben sich aus Fig. 5, die weiter unten beschrieben werden.

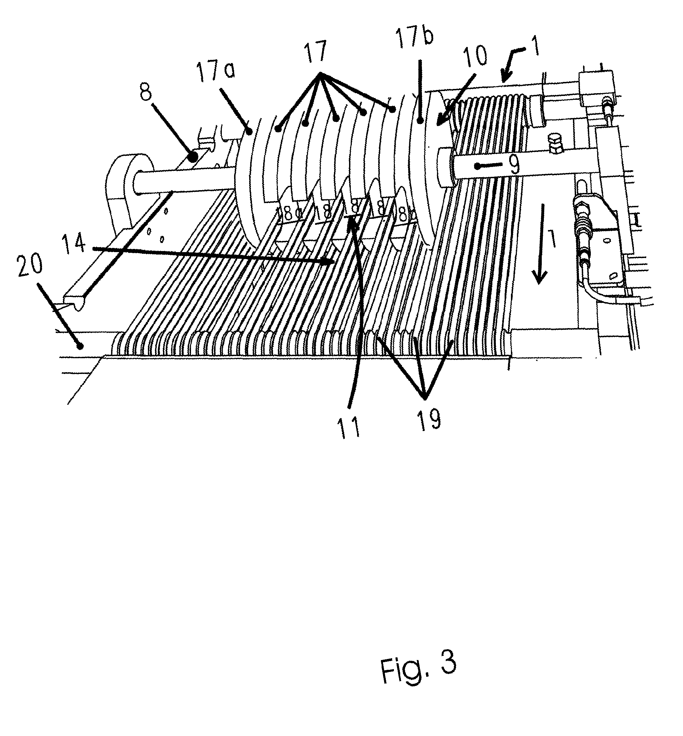

Gemäß Fig. 3 ist die Wendeeinrichtung 10 aus einem Verband mit sieben einzelnen Scheiben 17a,17,17b gebildet, die jeweils koaxial auf einer der gemeinsamen Antriebswelle 9 ortsfest und damit unverdrehbar fixiert sind. Im Gegensatz zu den beiden jeweils außenliegenden Scheiben 17a, 17b sind die sonstigen, inneren Scheiben 17 jeweils mit einer radial nach innen konvergierenden Aussparung 18 versehen, welche in der Stirnansicht etwa V-artig einen Freiraum begrenzt. Die jeweilige Winkelstellung der Scheiben 17 auf der Antriebswelle 9 ist derart, dass sich die jeweiligen Aussparungen 18 der Scheiben 17 quer zur Förderrichtung 1 gesehen decken bzw. miteinander fluchten. So bilden die jeweiligen Aussparungen 18 gemeinsam die anhand von Fig. 2 beschriebene Aufnahmevertiefung 11. Dabei können die Rundungen und Wölbungen der Aussparungen 18, insbesondere bei den beiden äußersten Aussparungen 18a, 18b so gestaltet sein, dass sich eine Anpassung an die Gestalt des aufzunehmenden Teigstücks und dessen Biegungen und Rundungen ergibt. Insbesondere können die beidseitig äußersten Aussparungen 18a, 18b mit Wandungen schräg zur Scheibengrundebene versehen sein, um eine Formbeeinträchtigung der Schenkelabschnitte 7 des Teigstücks möglichst gering zu halten.

Gemäß Fig. 3 ist der Ausgangsbereich 14 der erfindungsgemäßen Wendevorrichtung, welcher der Wendeeinrichtung 10 in Förderrichtung 1 nachgelagert ist, mit einer Mehrzahl von Förderriemen 19 gebildet, welche um eine ausgangsseitige Umlenkrolle 20 geführt sind.

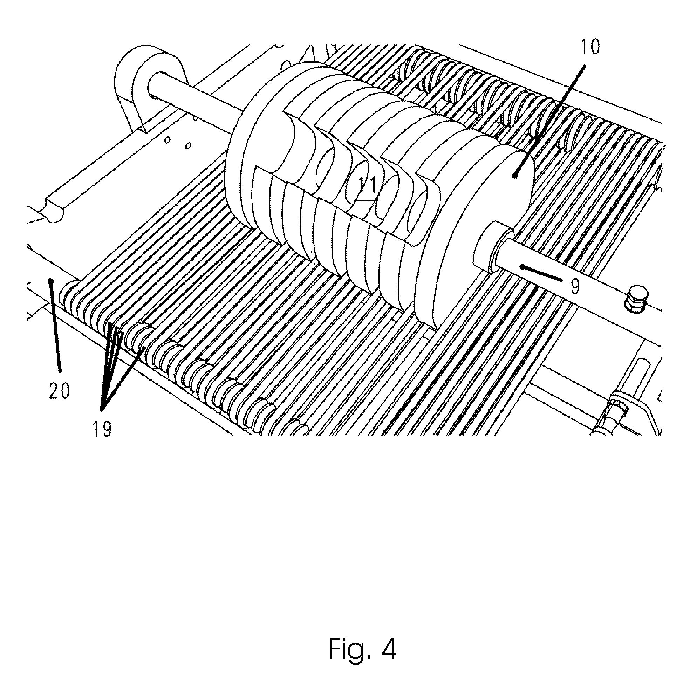

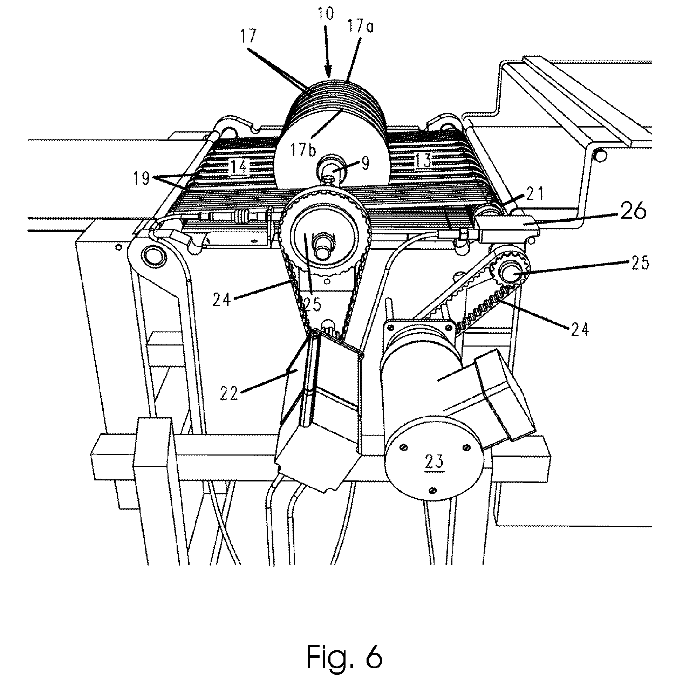

Gemäß Fig. 5 bilden diese Förderriemen 19 ferner auch den der Wendeeinrichtung 10 vorgelagerten Eingangsbereich 13. Gemäß Fig. 4 wird mittels der Förderriemen 19 gerade ein Teigstück 4 einer Aufnahmevertiefung 11 zugeführt. Der Eingangsbereich 13 ist von einer eingangsseitigen Umlenkrolle 21 begrenzt, um den die Förderriemen 19 ebenfalls geführt sind. Solange die Förderriemen 19 ein Teigstück 4 der Aufnahmevertiefung 11 der Wendeeinrichtung 10 zuführen, wird letztere über eine nicht dargestellte Steuerung und ein Wendeantriebsaggregat 22 stillgehalten. Dieses prägt bei entsprechender Ansteuerung, wenn ein Teigstück 4 aufgenommen und dann die Förderriemen still gehalten werden, der Antriebswelle 9 ein Drehmoment ein. Befindet sich (vgl. z. B. Fig. 4) die Wendeeinrichtung 10 nicht mehr in Aufnahmestellung, in welcher die Aufnahmevertiefung 11 etwa in einer Ebene beziehungsweise bündig mit den Förderriemen 19 liegen würde, werden über ein Förderantriebsaggregat 23 (Fig. 6) die Förderriemen 19 nicht in Förderrichtung 1 bewegt, sondern still gehalten, damit der Wendevorrichtung angelieferte Teigstücke durch die rotierende Wendeeinrichtung nicht verformt werden.

Wie besonders aus Fig. 5 ersichtlich, besitzen die parallel geführten Förderriemen 19 kleinere und größere Abstände voneinander, letzterer mit A markiert. Dieser dient dazu, das teilweise Eintauchen der Scheiben 17, 17a, 17b zu ermöglichen. Dazu entspricht der Abstand A etwa der jeweiligen Scheibendicke.

In Fig. 6 sind das Wendeantriebsaggregat 22 und das Förderantriebsaggregat 23 sichtbar. Beide bedienen sich in dem dargestellten Beispiel eines Riementriebs 24, um über jeweilige Abtriebszahnräder 25 die Antriebswelle 9 für die Wendeeinrichtung 10 mit kämmenden Scheiben 17, 17a, 17b und die eingangsseitige Umlenkrolle 21 für die Förderriemen 19 anzutreiben. Eine Lichtschranke 26, welche quer zur Förderrichtung 1 wirkt, erfasst ankommende Teigstücke 4 (gemäß Bearbeitungsschritt V in Fig. 1), welche gerade an den Eingangsbereich 13 von einem vorgelagerten Förderband angeliefert werden. Der Ausgang der Lichtschranke 26 ist mit einer (nicht gezeichneten) Steuerung verbunden, welche die beiden Antriebsaggregate 22 und 23 als Stellglieder für die Wendeeinrichtung 10 und die Fördermittel 12 mit Förderriemen 19 betätigt. Die Steuerungseinrichtung ist programm- und/oder schaltungstechnisch derart eingerichtet, dass die Wendeeinrichtung 10 stets um 180° gedreht wird, bis beide diagonalen Aufnahmevertiefungen 11 etwa auf gleicher Höhe mit den Förderriemen 19 liegen. Sodann wird die Wendeeinrichtung 10 angehalten. Während sich die Wendeeinrichtung 10 dreht, hält die Steuerung das Förderantriebsaggregat 23 und damit die Förderriemen 19 still, damit nicht ein etwa darauf liegendes Teigstück 4 durch die rotierenden Scheiben 17, 17a in seiner Form beeinträchtigt wird. Sensiert die Lichtschranke 26 ein ankommendes Teigstück 4 am Beginn des Eingangsbereichs 13, und ist die Wendeeinrichtung in der genanten Aufnahmestellung mit Aufnahmevertiefungen 11 auf gleicher Höhe wie die Förderriemen 19 gestellt, betätigt die Steuerung das Förderantriebsaggregat 23 für eine vorbestimmte Wartezeit. Diese ist so bemessen, dass das nun zur Wendeeinrichtung 10 bewegte Teigstück auf den Förderriemen 19 sicher in der Aufnahmevertiefung 11 untergebracht ist. Nach Ablauf der voreingestellten Wartezeit hält die Steuerung das Förderantriebsaggregat 23 wieder an, startet aber möglicherweise nach einer gewissen Zwischen-Totzeit das Wendeantriebsaggregat 22, um die Wendeeinrichtung 10 um etwa 180° zu drehen. Dabei wird die bisherige Oberseite des in der Aufnahmevertiefung 11 untergebrachten Teigstücks so gewendet, dass sie nunmehr mit dem Teigstückschluss 5 nach unten zeigt, während die gegenüberliegende bzw. diametral entgegengesetzte Seite des Teigstücks 4 mit Ankommen im Ausgangsbereich 14 nunmehr nach oben zeigt.

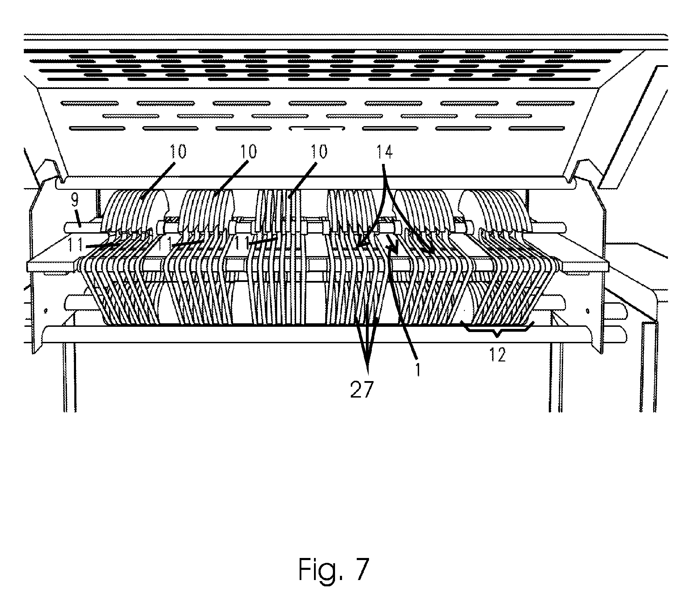

Eine weitere Abwandlung bzw. Ausführungsvariante der Erfindung ist in Fig. 7 gezeigt. Demnach sind auf der gemeinsamen Antriebswelle 9 mehrere Wendeeinrichtungen 10 in einer Reihe quer zur Teigförderrichtung 1 liegend fixiert. Infolgedessen drehen sie sich mit ihren jeweiligen Aufnahmevertiefungen, die analog den Fig. 2-6 gestaltet sind, zueinander synchron und in sich deckenden Winkellagen. Dies bedeutet, dass im Zusammenwirken mit den Fördermitteln 12, die im dargestellten Ausführungsbeispiel nun als äquidistante, flache Förderbänder 27 realisiert sind, gewendete Teigstücke (entsprechend Bearbeitungsschritt VI in Fig. 1) in den jeweiligen Ausgangsbereich 14 ausgegeben werden, die in einer der Anzahl der Wendeeinrichtungen 10 entsprechenden Anzahl relativ präzise in einer gemeinsamen Flucht quer zur Teigförderrichtung 1 liegen. Dies lässt sich u. a. dadurch bewerkstelligen, dass sämtliche Förderbänder 27 von einem gemeinsamen Förderantriebsaggregat und damit zueinander zeitsynchron bzw. gleichzeitig in Förderrichtung bewegt werden. Aufgrund des Kämmens der Wendeeinrichtungen 10 zwischen den Förderbändern 27 können letztere die Teigstücke erfassen und herausbefördern, welche in den jeweiligen Aufnahmevertiefungen 11 liegen.

### Bezugszeichenliste

- I-VI: Teigbearbeitungsschritte
- 1: Teigförderrichtung
- 2: Dreieckbasis
- 3: Dreieckspitze
- 4: gewickeltes Teigstück
- 5: Teigstück-Schluss
- 6: Spitzenden
- 7: Teigstück-Schenkel
- 8: Halterahmen
- 9: Antriebswelle
- 10: Wendeeinrichtung
- 11: Aufnahmevertiefung
- 12: Fördermittel
- 13: Eingangsbereich
- 14: Ausgangsbereich
- 15: Zahnkettentrieb
- 16: Antriebszahnrad
- 17: Scheibe
- 17a,17b: Außenscheiben
- 18a, 18b: äußerste Aussparung
- 19: Förderriemen
- 20: ausgangsseitige Umlenkrolle
- 21: eingangsseitige Umlenkrolle
- 22: Wendeantriebsaggregat
- 23: Förderantriebsaggregat
- A: Abstand
- 24: Riementrieb
- 25: Abtriebszahnräder
- 26: Lichtschranke
- 27: Förderbänder

## Patentansprüche

1. Verfahren zum Wenden eines Teigstücks (4) insbesondere in Croissantform, bei dem unter Verwendung von Fördermitteln (12) das Teigstück (4) einer um eine Drehachse (9) drehbaren Wendeeinrichtung (10) zugeführt und von dieser wieder abtransportiert wird, und mittels einem oder mehreren Mitnehmerelementen auf der Außenwandung oder Außen-Ummantelung der Wendeeinrichtung (10) das Teigstück (4) erfasst, längs einer die Drehachse (9) umlaufenden Wendebahn geführt und dabei auf eine andere Seite gelegt wird, **dadurch gekennzeichnet, dass** das Teigstück (4) mit oder nach seinem Erfassen durch das oder die Mitnehmerelemente
a) von den Fördermitteln (12) gelöst,
b) nach seinem Durchlaufen der Wendebahn wieder in Eingriff mit den Fördermitteln (12) zwecks seines Abtransports (14) gebracht
c) und dabei aus oder von dem oder den Mitnehmerelementen gelöst und/oder entfernt wird.

2. Verfahren nach Anspruch 1, **dadurch gekennzeichnet, dass** zur Aufnahme und/oder zum Abtransport (14) der Teigstücke (4) die Rotation der Wendeeinrichtung (10) unterbrochen, die Fördermittel (12) aber bewegt werden.

3. Verfahren nach Ansprüche 2, **dadurch gekennzeichnet, dass** während der Rotation der Wendeeinrichtung (10) die Fördermittel (12) an- beziehungsweise stillgehalten werden.

4. Verfahren nach einem der vorangehenden Ansprüche, **dadurch gekennzeichnet, dass** abwechselnd die Fördermittel (12) und die Wendeeinrichtung (10) in Bewegung versetzt werden.

5. Verfahren nach einem der vorangehenden Ansprüche, **dadurch gekennzeichnet, dass** gemeinsam für das Zuführen (13) und den Abtransport (14) der Teigstücke (4) einheitliche und die Wendeeinrichtung (10) durchsetzende oder durchkämmende Fördermittel (12) verwendet werden.

6. Verfahren nach einem der vorangehenden Ansprüche, **dadurch gekennzeichnet, dass**, jeweils mittels der Fördermittel (12), ein Teigstück (4) von einem ersten Mitnehmerelement erfasst und/oder diesem zugeführt wird, und gleichzeitig ein bereits gewendetes Teigstück von einem zweiten Mitnehmerelement gelöst und/oder weg geführt wird.

7. Verfahren nach einem der vorangehenden Ansprüche, **dadurch gekennzeichnet, dass** die Wendeeinrichtung (10) und die Fördermittel (12) durch voneinander separat ansteuerbare Antriebsmittel (22,23) bewegt werden.

8. Verfahren nach einem der vorangehenden Ansprüche, **dadurch gekennzeichnet, dass** die Wendeeinrichtung (10) und die Fördermittel (12) durch Antriebsmittel (22,23) bewegt werden, die abhängig von Sensormitteln (25) angesteuert werden, welche die Teigstücke (4) erfassen.

9. Verfahren nach einem der vorangehenden Ansprüche, wobei Teigstücke (4) mit einer U- oder hufeisenartig gebogenen Form zugeführt werden, welche in zwei freie Schenkelenden (6,7) ausläuft, **dadurch gekennzeichnet, dass** die Teigstücke (4) der Wendeeinrichtung (10) mit entgegen der Förderrichtung (1) nach hinten weisenden Schenkelenden (6,7) zugeführt werden.

10. Verfahren nach einem der vorangehenden Ansprüche, wobei Teigstücke (4) zugeführt werden, die aus einem dreieckförmigen Ausgangs-Teigstück (1,2,3) in Croissantform gewickelt (II,III,IV) und U-artig gebogen (V) sind, und bei denen ein gegebenenfalls abgestumpfter Teigstück-Eckbereich (3) einen auf der Teigstück-Oberseite mittig zwischen den Schenkeln liegenden Schluss (5) bildet, **dadurch gekennzeichnet, dass** das U-artige Teigstück (4) mit in Förderrichtung (1) gesehen nach vorne weisendem Schluss (5) zugeführt wird.

11. Verfahren nach einem der vorangehenden Ansprüche, **dadurch gekennzeichnet, dass** mehrere quer zur Teigstück-Förderrichtung (1) nebeneinander liegende Wendeeinrichtungen (10) und/oder Mitnehmerelemente gleicher Winkellage mit jeweils zugeführtem Teigstück (4) zueinander synchron gedreht und angehalten werden, um eine quer zur Förderrichtung (1) verlaufende Reihe ausgerichteter, gewendeter Teigstücke (4) auszugeben.

12. Verfahren nach Anspruch 11, **dadurch gekennzeichnet, dass** die Fördermittel (12) zum Erfassen und Zuführen von mehreren Teigstücken (4) verwendet werden, die zueinander, in Förder-Querrichtung gesehen, in Förderrichtung versetzt angeordnet sind, wobei ein in Förderrichtung zuerst ankommendes Teigstück (4) sensiert wird, und darauf hin nach einer vorbestimmten Wartezeit die mehreren Wendeeinrichtungen (10) gleichzeitig in Drehung versetzt werden.

13. Verfahren nach Anspruch 12, **dadurch gekennzeichnet, dass** nach Ablauf der Wartezeit die Fördermittel (12) angehalten werden.

14. Verfahren nach einem der vorangehenden Ansprüche, **dadurch gekennzeichnet, dass** eine Wendeeinrichtung (10) mit zwei außenseitig diagonal, diametral und/oder gegenüberliegend angeordneten Mitnehmerelementen verwendet wird, und die Wendeeinrichtung (10) nach Aufnahme und Ausgabe eines jeweiligen Teigstücks (4) um jeweils 180 Grad gedreht und dann wieder angehalten wird.

15. Vorrichtung zum Wenden eines Teigstücks (4) insbesondere in Croissantform, zur Durchführung des Verfahrens nach einem der vorangehenden Ansprüche, mit einer um eine Drehachse (9) drehbaren Wendeeinrichtung (10), welche auf der Außenseite ihres Mantels oder auf ihrem Außenumfang ein oder mehrere, derart ausgebildete Mitnehmerelemente für die Teigstücke (4) aufweist, dass sich diese längs einer die Drehachse (9) umlaufenden Wendebahn bewegen und dabei von einer auf die andere Seite wenden lassen, **dadurch gekennzeichnet, dass** die Mitnehmerelemente zur formschlüssigen Aufnahme der Teigstücke (4) und/oder als ein oder mehrere vorspringende Greiforgane und/oder als ein oder mehrere Aufnahmevertiefungen (11) ausgebildet sind.

16. Vorrichtung insbesondere nach Anspruch 15, zum Wenden eines Teigstücks (4) insbesondere in Croissantform, zur Durchführung des Verfahrens nach einem der Ansprüche 1 bis 14, mit einer um eine Drehachse (9) drehbaren Wendeeinrichtung (10), welche auf der Außenseite ihres Mantels oder auf ihrem Außenumfang ein oder mehrere, derart ausgebildete Mitnehmerelemente für die Teigstücke (4) aufweist, dass sich diese längs einer die Drehachse (9) umlaufenden Wendebahn bewegen und dabei von einer auf die andere Seite wenden lassen, **gekennzeichnet durch** Fördermittel (12), welche jeweils für die Teigstücke (4) als ein der Wendeeinrichtung (10) vorgelagerter Zuführbereich (13) und/oder als ein der Wendeeinrichtung (10) nachgeordneter Abtransportbereich (14) zu beziehungsweise aus dem oder den Mitnehmerelementen angeordnet sind.

17. Vorrichtung nach Anspruch 16, **dadurch gekennzeichnet, dass** die Wendeeinrichtung (10) und die Fördermittel (12) einander durchsetzend oder durchdringend angeordnet sind.

18. Vorrichtung nach einem der vorangehenden Ansprüche, **dadurch gekennzeichnet, dass** die Wendeeinrichtung (10) mit einer trommelartigen, walzenartigen und/oder zylindrischen Grundform oder Mantelfläche gestaltet ist.

19. Vorrichtung nach einem der vorangehenden Ansprüche, **dadurch gekennzeichnet, dass** die Mitnehmerelemente bezüglich der Drehachse der Wendeeinrichtung (10) diametral, diagonal und/oder symmetrisch angeordnet sind.

20. Vorrichtung nach einem der vorangehenden Ansprüche, **dadurch gekennzeichnet, dass** der Wendeeinrichtung (10) sowohl eingangs- als auch ausgangsseitig die selben Fördermittel (12) zugeordnet sind.

21. Vorrichtung nach Anspruch 20, **dadurch gekennzeichnet, dass** die Fördermittel (12) mit einzelnen, parallelen, quer zur Förderrichtung (1) voneinander beabstandeten Förderriemen (19) oder -bänder (26) realisiert sind, zwischen welchen die Wendeeinrichtung (10) mit vorspringenden Teilen eintaucht und/oder kämmt.

22. Vorrichtung nach einem der vorangehenden Ansprüche, **dadurch gekennzeichnet, dass** die Wendeeinrichtung (10) mit einer Mehrzahl beziehungsweise einem Verband einzelner beabstandeter Scheiben (17,17a,17b) realisiert ist, die von einer gemeinsamen, quer zur Teigstück-Förderrichtung (1) verlaufenden Antriebswelle (9) drehfest durchsetzt sind, wobei wenigstens eines der Mitnehmerelemente durch sich in der Winkellage deckende und/oder gleiche Winkellage aufweisende Aussparungen (18,18a,18b) in den Randbereichen wenigstens eines Teils der Scheiben (17,17a,17b) gebildet ist.

23. Vorrichtung nach Anspruch 22, **dadurch gekennzeichnet, dass** die beiden äußersten, beidseitig den Scheibenverband abschließenden Scheiben (17,17a,17b) ohne Aussparungen (18) in den Randbereichen gebildet sind.

24. Vorrichtung nach Anspruch 21 und einem der Ansprüche 22 oder 23, **dadurch gekennzeichnet, dass** die von der Antriebswelle (9) vorspringenden Scheiben (17,17a,17b) die eintauchenden oder kämmenden Teile bilden.

25. Vorrichtung nach Anspruch 24, **dadurch gekennzeichnet, dass** der axiale oder achsparallele Abstand der Scheiben (17,17a,17b) voneinander derart bemessen ist, dass dazwischen ein oder mehrere Förderriemen (19) oder - bänder (26) Platz finden können.

26. Vorrichtung nach einem der vorangehenden Ansprüche, **dadurch gekennzeichnet, dass** die Wendeeinheit (10) und die Fördermittel (12) mit voneinander separaten Antriebseinheiten (22,23) verbunden sind, die von einer gemeinsamen Steuerung koordiniert sind.

27. Vorrichtung nach Anspruch 26, **dadurch gekennzeichnet, dass** wenigstens in einem Zuführbereich der Fördermittel (12) eine Sensoreinrichtung (25) angeordnet ist, die ausgangsseitig mit der Steuerung verbunden ist.)

28. Vorrichtung nach einem der vorangehenden Ansprüche, **dadurch gekennzeichnet, dass** mehrere Wendeeinrichtungen (10) in einer gemeinsamen Flucht quer zur Förderrichtung (1) liegend und/oder mit einer gemeinsamen Drehachse (9) quer zur Förderrichtung (1) angeordnet sind.

29. Vorrichtung nach einem der vorangehenden Ansprüche, **dadurch gekennzeichnet, dass** die Wendeeinrichtung (10) mit einer Teig abweisenden Beschichtung mit Antihaftwirkung, insbesondere mit Teflon oder DNC (vgl. Fa. AHC Oberlächentechnik, Kerpen, DE) versehen ist.
